# EUROPEAN PATENT APPLICATION

(11) **EP 1 148 431 A1**
(43) Date of publication of application: **24.10.2001**
(21) Application number: 00307568.6
(22) Date of filing: 01.09.2000
(51) Int. Cl.: G06F 17/60

(54) **System and method for collecting, aggregating, and distributing pricing information**

(30) Priority: 18.04.2000 US 197604 P; 21.06.2000 US 598387
(71) Applicant: MoneyLine Network, Inc., New York, New York 10013 (US)
(72) Inventor: Ng, Larry, Forest Hills, NY 11375 (US); Cenatiempo, Phil, Manalapan, NJ 07726 (US)
(74) Representative: Nicholls, Michael John

(57) **Abstract**

A method and system for providing real-time, accurate, and comprehensive pricing information to dealers of a product, such as, financial instruments, in a cost efficient manner. The system receives the dealer's internal, proprietary pricing information, determines a composite price for the product based on the received information, and distributes the composite price in a customized digital data feed to the dealer. A dealer receives only receives this composite pricing information for products on which it has submitted its internal pricing information. The composite price reflects pricing information collected from several dealers while maintaining the confidentiality of each dealer. Pricing information received from each dealer is compared to pricing information received from other dealers, and dealers found to provide pricing information which is inconsistent with pricing information provided by other dealers are prohibited from receiving composite pricing information in the future. The system and method can also be used to provide composite pricing information on any commodity which is sold at a non-fixed price outside an organized exchange.

## Description

This invention relates generally to data processing systems, and more specifically, to methods and systems for providing composite pricing information.

Financial instruments such as fixed-income securities, money market instruments, foreign exchange transactions, and associated derivatives, are generally traded over-the-counter rather than on organized exchanges. Liquidity in these markets is largely provided by major financial instructions, banks and dealers who commit capital to these financial markets and trade the financial instruments among themselves. Dealers assess what they believe to be the fair market value of a financial instrument based on both their market expertise and available information indicating such fair market value.

A dealer "makes a market" in a financial instrument by representing to other market participants a willingness to buy a specific quantity of the financial instrument at a specific price, i.e., a bid price, or a willingness to sell a specific quantity of that same financial instrument, generally at a slightly higher price, i.e., an offer price. The difference between the bid price and the offer price represents the dealer's trading profit, or spread. Market makers are interested in the bid and offer prices of their competitors to determine whether their own prices are competitive with those of their marketplace peers. The critical role of the dissemination of bid, offer, and spread information lead to the advent of data vendors which distribute content data including financial news, data, and real-time pricing information of dealers of financial instruments, for example, the Market Data Business.

Typically, data vendors collect content data from various sources, aggregate and organize it, and publish the information into a common vendor network, like Bloomberg™, or Reuters™, which then distributes the raw data via a digital feed to any number of dealers of financial instruments. The digital feed is broadcast to dealers of financial instruments according to a push technology in which each dealer receives and pays for the entire feed of information, whether or not requested. Thus, in essence, dealers of financial instruments provide financial and pricing information to data vendors, and receive, i.e., purchase, both the information they provided in addition to other broadcast information, some of which may be irrelevant for their needs.

Data vendors generally subject the dealers of financial instruments to pricing schemes which limit the dealer's use of the data once it has been received. Such pricing schemes may assess a charge per-terminal or per-user. Both of these pricing schemes restrict the dealers of financial instruments' internal use of the content data which they purchased. Further, such restricted use pricing schemes are ultimately more costly to the dealer of financial instruments, in terms of both the actual cost and opportunity cost related to the restrictions on the use of the data.

Data vendors generally collect content data by soliciting information from dealers of financial instruments who manually, or automatically, send the information to the data vendors. Due to competitive market demands, and the reality that other dealers of financial instruments have access to the pricing information once submitted to a data vendor, dealers of financial instruments do not have an incentive to provide accurate or comprehensive pricing information. Rather, dealers have an incentive to provide skewed, or otherwise erroneous information, to protect their internal and confidential pricing schedules, or alternatively, to forego providing their pricing information to data vendors. The result is a financial instruments pricing market which reflects inconsistent, inaccurate, and incomplete pricing information, perpetuating an overall low quality information exchange. Additionally, the resulting market is less competitive and the fair market value of a financial instrument is much harder to discern.

Accordingly, a need exists for a more efficient manner of providing dealers of financial instruments with high-quality, real-time financial instruments-related content data, including pricing information. Similarly, in other markets for selling non-financial products which do not have a standardized or fixed price, buyers and sellers need a more efficient manner of obtaining pricing information.

An object of the present invention is to overcome the deficiencies and disadvantages of the prior art by providing pricing information for financial and non-financial products not subject to standardized or fixed pricing schemes. In accordance with an object of the present invention, pricing information is provided over a network including a first dealer of a product and a second dealer of a product, the first and second dealers indicating first and second prices for the product. The method receives the first and second prices, determines a composite price, and displays the composite price (including best bid and best offer) of the product to the first and second dealers.

In accordance with another object of the present invention, method is provided to provide product pricing information to at least two dealers of products, the dealers each indicating a price for a product. The method receives from each dealer a price for the product, determines a composite price of the product by comparing the price received from each dealer, and displays the composite price to each of the dealers.

A further object of the present invention is to provide a market data exchange ("MDX"™) system which collects from a dealer of financial instruments internal pricing data of a financial instrument, aggregates the data, determines a composite price which reflects pricing data from at least several dealers of the financial instrument, and distributes a customized feed of the composite price to subscribers of the service. MDX computes the composite price in a manner that is transparent to the dealers of financial instruments providing and receiving the price data in order to avoid disclosing confidential pricing information of any specific dealer, while ensuring that it provides high quality and accurate data. MDX further performs a quality check of the pricing data received from a financial instrument dealer to ensure that its data feed actually reflects accurate pricing of a particular financial instrument. MDX will disable the data feed to dealers of financial instruments who routinely provide pricing information that is inconsistent with the information provided by their marketplace peers, further ensuring a high quality and high accuracy data exchange system.

The MDX system offers unlimited distribution and unrestricted use of financial instrument pricing information to dealers of financial instruments. Access to MDX may be based on a nominal flat fee, rendering the system cost efficient. MDX is compatible with, for example, the Tibco™ and XML open industry standard interfaces for distributing real time data from market vendors to trading floors.

In accordance with an embodiment of the present invention, a system is provided for distributing customized financial instruments composite pricing information to a dealer of financial instruments who has access to MDX, either by subscription or membership. MDX receives internal pricing information reflecting a particular dealer of financial instruments' internal price for buying and selling a particular financial instrument. MDX compares the received information to information received from other subscribing dealers to determine the quality of the data, as evidenced by its consistency with data from other dealers. MDX then computes a composite price for the financial instrument, the composite price reflecting pricing data received from several dealers of financial instruments. A customized data feed reflecting the composite price of financial instrument for which a dealer provided its internal pricing information is then distributed to the dealer.

In accordance with another embodiment of the present invention, a computer-implemented method for providing financial instruments pricing information over a network is provided. The method includes receiving from a first dealer of financial instruments a first price for a financial instrument, receiving from a second dealer of financial instruments a second price for the financial instrument, determining a composite price of the financial instrument based on the prices received from the first and second dealers, and displaying the composite price of the financial instrument to the first and second dealers of financial instruments.

Still further, in accordance with another embodiment of the invention, a computer-implemented method for receiving financial instruments pricing information over a network is provided. This method includes sending to a third party a price for a financial instrument, and receiving from the third party a composite price of the financial instrument, the composite price reflecting pricing information of the financial instrument from multiple dealers.

In accordance with yet another embodiment of the invention, a data processing system provides financial instruments pricing information to a dealer of financial instruments. The data processing includes a client computer used by a dealer of financial instruments for sending to a server computer a price of a financial instrument, the server computer including a memory which includes a program to determine a composite price of the financial instrument, the composite price reflecting a price of the financial instrument received from the dealer of financial instruments, and a processor for executing the program.

In accordance with still another embodiment of the present invention, a computer-readable medium containing instructions for providing financial instruments pricing information over a network is provided. The computer-readable medium includes a first unit to determine a composite price of a financial instrument based on a price of the financial instrument received from a first dealer of financial instruments and a second dealer of financial instruments, a second unit to determine whether the price of the financial instrument provided by the first and the second dealers of financial instruments is consistent with a price of the financial instrument provided by a third dealer of financial instruments, and a third unit to display to the first, second, and third dealers the composite price of the financial instrument.

It will be appreciated that the invention extends to a computer program comprising program code means for implementing the method.

The invention therefore provides a technical solution to the problems addressed by automatically calculating a composite price, which does not therefore disclose specific users' prices to other users. It can also automatically quality check incoming data and exclude data of persistently low quality by disabling that data feed.

The invention will be further described by way of example with reference to the accompanying drawings, in which:-
Figure 1 depicts a block diagram of a data processing system suitable for practicing methods and implementing systems consistent with the present invention; and
Figure 2 depicts a flow diagram of the MDX system depicted in Figure 1.

The present invention provides a system and method of exchanging data, Market Data Exchange ("MDX"), which provides real-time, accurate, and comprehensive pricing information to subscribing dealers of a product. MDX may be used to provide pricing information for any financial or non-financial product which is sold at a non-fixed price outside an organized exchange. In this description, the MDX system is described relative to the financial instruments market. The term "financial instruments" refers to fixed-income securities, money market instruments, foreign exchange transactions, and associated derivatives.

MDX receives a dealer's internal, proprietary pricing information, determines a composite price, and distributes the composite price in a customized digital data feed to the dealer. A dealer only receives composite pricing information for products for which it has submitted its internal pricing information. The composite price reflects pricing information collected from multiple dealers, but maintains the confidentiality of the proprietary pricing of each contributing dealer. MDX ensures the integrity of the information it provides by determining whether each of the pricing data received from a particular dealer is consistent with the pricing data received from other dealers. By maintaining an individual dealer's information as confidential, while providing accurate insight into the pricing of the same product offered by other dealers, MDX provides dealers with an incentive to provide both comprehensive and accurate pricing information for all of the products that they deal in. Therefore, dealers are better able to determine an appropriate fair market value of a product.

If MDX determines that a dealer is providing erroneous pricing information, or information that appears erroneous due to its inconsistencies with pricing information provided by other dealers, that dealer will be restricted from receiving subsequent customized feeds of composite financial instrument pricing information. This quality check ensures that MDX receives and provides accurate, high quality pricing information. MDX thus offers members of the financial community an ability to share information among themselves while realizing the advantages of having built-in safeguards for quality assurance and fairness.

MDX provides the composite pricing information to dealers via, for example, a permanent, open-socket digital data feed, or another technology either currently known or later developed. After receiving composite financial instruments pricing information from MDX, a dealer may use the information internally, without restriction.

The MDX system is compatible with, for example, the Tibco™ software system, which receives and distributes data feeds from traditional market data vendors to many trading floors and dealers of financial instruments via a standard format protocol. Because MDX is compatible with Tibco™, a dealer of financial instruments does not have to purchase additional software to utilize the MDX system. However, MDX also provides a proprietary graphical user interface which may be used to provide composite pricing information to subscribing dealers of financial instruments.

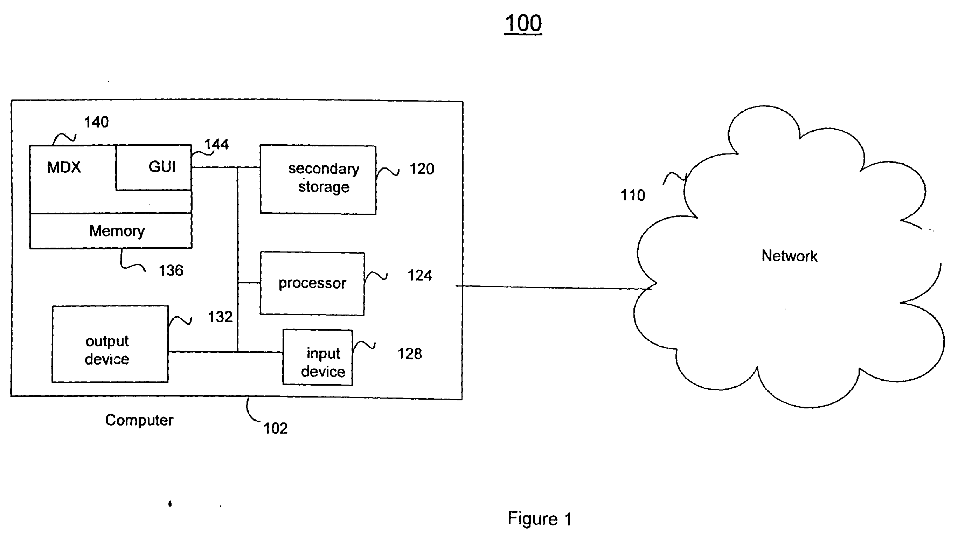

Figure 1 depicts a block diagram of data processing system 100 suitable for practicing methods and implementing systems consistent with the present invention. Data processing system 100, for example, includes computer 102 connected to network 110. Network 110 could be, for example, a local area network (LAN), wide area network (WAN), metropolitan area network (MAN), or Internet, Intranet, or Extranet. Computer 102 includes, for example, secondary storage device 120, processor 124, input device 128, output device 132, and memory 136. Memory 136 further includes MDX (market data exchange) system 140, which receives, determines the integrity of, computes a composite price for, and distributes pricing information among dealers of financial instruments which subscribe to, or otherwise have access to, the MDX system.

Computer 102 corresponds to, for example, a server computer which may be maintained as a host website of an independent organization, such as a telecommunications carrier functioning as an outsourcing server for telecommunications connectivity between the MDX system and subscribers of the system.

Although aspects of the present invention are depicted as being stored in memory 136, aspects of the present invention may be stored on or read from other computer readable media, such as secondary storage devices, like hard disks, floppy disks, and CD-ROM; a carrier wave received from a network such as the Internet; or other forms of RAM or ROM, either currently known or later developed.

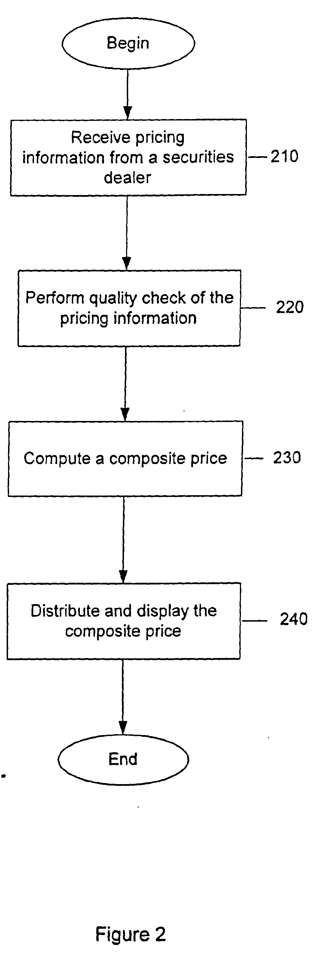

Fig. 2 depicts a flow chart of the operation of the MDX system when distributing customized content data to a dealer of financial instruments. Each dealer of financial instruments publishes its financial news, data, and real-time pricing information on its internal network using a standard protocol, for example, the XML open industry standard for distributing real-time data. The MDX system receives this internal pricing data only for the financial instruments in which the dealer is interested in receiving from MDX composite pricing data, without necessarily requiring the dealers to alter their normal internal data distribution practices (210). A dealer of financial instruments may allow MDX to access its raw pricing data. The pricing information provided to MDX may thus be a single price, or a set of rules, i.e., pricing scheme, for determining a price for the financial instrument. Alternatively, a dealer of financial instruments may send to MDX its internal pricing information for each of the financial instruments for which the dealer is interested in receiving composite pricing data.

Once MDX has received pricing information from a dealer of financial instruments, it determines whether the information is consistent with pricing information received from other dealers (220). MDX determines the quality of pricing information provided by a particular dealer by applying data integrity rules to the information. The integrity rules include comparing the received price to the mean and standard deviation of pricing information for a particular financial instrument which is received from other dealers of financial instruments. For example, if a financial instrument price received from a particular dealer is consistently greater than one-half standard deviation from the mean of other dealers' prices for that same financial instrument, then the dealer will be notified that it is providing "outlier" pricing information, i.e., pricing information that is not consistent with pricing information submitted by other dealers. Such outlier pricing information contradicts the goal of MDX and thus is not included in computation of a composite price for a financial instrument. Accordingly, dealers of financial instruments who provide outlier pricing information are not contributing to the MDX information exchange system and may in the future be barred from receiving from MDX composite pricing information. If the MDX system determines that a dealer is failing on a regular basis to provide quality pricing information, e.g., if a dealer regularly provides outlier pricing information, after notifying the dealer of the discrepancy, the dealer's access to MDX data may be restricted if the outlier information continues to be submitted to MDX. This functions as a quality control mechanism for MDX and helps maintain the accuracy and integrity of the composite pricing information computed and distributed by MDX.

After the integrity of the pricing information provided by a particular dealer for a specific financial instrument has been determined, the information is aggregated with pricing information provided by other dealers, and MDX determines a composite price for the financial instrument (230). The "composite" price of a financial instrument reflects the best bid and best offer pricing information as determined by the pricing information received from at least several dealers of the financial instrument. This composite rate is determined in a manner that is transparent to a dealer of financial instruments. By publishing the composite price of a financial instrument, rather than a particular dealer's actual price of the financial instrument, MDX encourages dealers to provide accurate pricing information, thereby increasing the accuracy and subsequent value of the pricing information it publishes to dealers of financial instruments without eroding the integrity, or confidential pricing schemes, of the dealers of financial instruments providing the pricing information. Outlier pricing information is not considered when determining a composite price.

MDX determines a composite price for a financial instrument by selecting from the data provided by several dealers of financial instruments, generally at least three, the best bid and offer prices. Of the prices provided by the representative dealers, the best bid price and the best offer price for a financial instrument are used as the composite price for the financial instrument. Once a composite price for a particular financial instrument has been determined, the composite price is transmitted in a real-time customized feed to each dealer of financial instruments who provided its internal pricing information for that financial instrument (240). A dealer of financial instruments only receives composite pricing information for products for which the dealer provides pricing information. Dealers of financial instruments are thus given pricing information in exchange for providing their pricing information. This not only increases the amount of data included in the MDX system but also increases the value of the MDX system, since the better and more comprehensive the market information available, the more competitive the market will ultimately be.

Once a dealer receives from MDX composite pricing information for a particular financial instrument, the dealer may use that information firm-wide without any restrictions. MDX may charge the subscribers for the information based on a nominal flat fee, rather than on a per use, per terminal, or per byte basis. Further, because dealers only receive information for products on which they provide pricing information, dealers are not receiving or paying for information that is not of interest or relevance to their immediate business, e.g., dealers are not paying for their own pricing information.

The customized data feed of composite pricing information for a financial instrument may be provided to a dealer of financial instruments via a proprietary MDX viewer -- i.e., a graphical user interface on a handheld device, such as a mobile phone, electronic organizer, etc. The data may also be provided via, for example, a permanent, open-socket connection from a server to the display device.

Methods and systems operating in accordance with the principles of the present invention provide contributing dealers of financial instruments with high quality, customized composite pricing information for financial instruments. The system includes a quality screening process and distributes customized composite pricing information to dealers of financial instruments who subscribe to the MDX system and provide their bid and offer prices for a particular financial instrument. The system thus motivates dealers of financial instruments to provide their most competitive bid and offer prices and thereby provides a valuable set of pricing information to dealers of financial instruments.

Although the foregoing description has been described with reference to a specific implementation, those skilled in the art will know of various changes in form and detail which may be made without departing from the spirit and scope of the invention as defined in the appended claims and the full scope of their equivalents. As indicated above, this system may be used to provide pricing information to market makers in a variety of industries, and is therefore not limited to dealers of financial instruments.

## Claims

1. A method to provide financial instruments pricing information over a network including a first dealer of financial instruments and a second dealer of financial instruments, the first and second dealers indicating a first price and a second price, respectively, for a financial instrument, the method comprising:
receiving the first and second prices for the financial instrument;
determining a composite price of the financial instrument based on the first and second prices for the financial instrument; and
displaying the composite price of the financial instrument to the first and second dealers.

2. The method of claim 1, wherein the receiving is performed over the network.

3. The method of claim 1, further including determining a quality of the first and second prices of the financial instrument by comparing the first and second prices with a third price for the financial instrument.

4. The method of claim 1, further including sending a customized feed of financial instrument pricing information to the first and second dealers.

5. The method of claim 1, further including determining a quality of the first price of the financial instrument by comparing it with a second price of the financial instrument.

6. A method to provide pricing information over a network including a first dealer of a product and a second dealer of a product, the first and second dealers indicating a first price and a second price, respectively, for the product, the method comprising:
receiving the first and second prices for the product;
determining a composite price of the product based on the first and second prices of the product; and
displaying the composite price of the product to the first and second dealers.

7. A method to provide financial instruments pricing information over a network, comprising:
receiving from a first dealer of financial instruments a first price for a financial instrument;
receiving from a second dealer of financial instruments a second price for the financial instrument;
determining a composite price of the financial instrument based on the first and second prices for the financial instrument; and
displaying the composite price of the financial instrument to the first and second dealers.

8. The method of claim 7, wherein the displaying includes sending the composite price to the first and second dealers over the network.

9. The method of claim 7, further including determining a quality of the first and second prices of the financial instrument by comparing the first and second prices with a third price for the financial instrument.

10. A method to provide financial instruments pricing information to at least two dealers of financial instruments, the dealers each indicating a price for a financial instrument, the method comprising:
receiving from each dealer the price for the financial instrument;
determining a composite price of the financial instrument by comparing the price received from each dealer; and
displaying the composite price to each of the dealers.

11. A method to provide product pricing information to at least two dealers of a product, the dealers each indicating a price for the product, the method comprising:
receiving from each dealer the price for the product;
determining a composite price of the product by comparing the price received from each dealer; and
displaying the composite price to each of the dealers.

12. A method for receiving financial instruments pricing information over a network, comprising:
sending to a third party a price for a financial instrument; and
receiving from the third party a composite price of the financial instrument, the composite price reflecting pricing information received from multiple dealers of the financial instrument.

13. The method of claim 12, further including displaying to a sending party the composite price of the financial instrument.

14. The method of claim 12, wherein the receiving is performed over a network.

15. A data processing system to provide financial instruments pricing information to a dealer of financial instruments, comprising:
a device used by a dealer of financial instruments to send to a server a price of a financial instrument, the server including a program for determining a composite price of the financial instrument, the composite price reflecting a price of the financial instrument received from multiple dealers of financial instruments.

16. The data processing system of claim 15, wherein the client computer further includes a display device for displaying the composite price of the financial instrument.

17. A data processing system to provide product pricing information to a dealer of products, comprising:
a device used by a dealer of product to send to a server a price of a product, the server including a program for determining a composite price of the product, the composite price reflecting a price of the product received from multiple dealers of the products.

18. The data processing system of claim 17, wherein the client computer further includes a display device for displaying the composite price of the product.

19. A data processing system to receive financial instruments pricing information from a dealer of financial instruments, comprising:
a device used by the dealer of financial instruments to send a price of a financial instrument to a program for determining a composite price of the financial instrument, the composite price reflecting a price of the financial instrument received from multiple dealers of financial instruments, the client computer further receiving the composite price of the financial instrument.

20. The data processing system of claim 19, wherein the client computer includes a display device for displaying the composite price of the financial instrument.

21. A data processing system to receive product pricing information from a dealer of products, comprising:
a device used by the dealer of products to send a price of a product to a program for determining a composite price of the product, the composite price reflecting a price of the product received from multiple dealers of products, the client computer further receiving the composite price of the product.

22. The data processing system of claim 21, wherein the client computer includes a display device for displaying the composite price of the product.

23. A computer-readable medium having instructions for providing financial instruments pricing information over a network, comprising:
a first unit to determine a composite price of a financial instrument based on a first and a second price of the financial instrument received from a first dealer of financial instruments and a second dealer of financial instruments, respectively;
a second unit to determine whether the price of the financial instrument provided by the first and the second dealers of financial instruments is consistent with a price of the financial instrument provided by a third dealer of financial instruments; and
a third unit to display to the first, second, and third dealers of financial instruments the composite price of the financial instrument.

24. A computer-readable medium having instructions for providing product pricing information over a network, comprising:
a first unit to determine a composite price of a product based on a first and a second price of the product received from a first dealer of products and a second dealer of products, respectively;
a second unit to determine whether the price of the product provided by the first and the second dealers of products is consistent with a price of the product provided by a third dealer of products; and
a third unit to display to the first, second, and third dealers of products the composite price of the product.
